# EUROPEAN PATENT SPECIFICATION

(11) **EP 0 995 703 B1**
(45) Date of publication and mention of the grant of the patent: **12.06.2002**
(21) Application number: 99120047.8
(22) Date of filing: 19.10.1999
(51) Int. Cl.: B65G 53/56, B29C 45/18, F16K 11/22

(54) **Multi-way distribuition manifold, particulary for the automated selective connection of a plurality of storage containers to a plurality of molding machines in plastics processing plants**
Mehrwegverteiler insbesondere für die automatisierte selektive Verbindung einer Vielzahl von Vorratsbehältern mit einer Vielzahl von Geissmaschinen in Kunststoff verarbeitenden Anlagen
Collecteur de distribution à voies multiples particulièrement pour le raccordement sélectif automatisé d'une multiplicité de récipients de stockage avec une multiplicité d'installations de transformation des matières synthétiques

(30) Priority: 21.10.1998 IT PD980248
(43) Date of publication of application: 26.04.2000
(73) Proprietor: MORETTO P.A. S.r.l., I-35010 Massanzago, Padova (IT)
(72) Inventor: Moretto, Renato, 35010 Massanzago (Prov.of Padova) (IT)
(74) Representative: Modiano, Guido, Dr.-Ing.

(56) References cited:
- WO-A-98/12140

## Description

The present invention relates to a distribution manifold which can be used particularly in plastics molding plants, in which the manifold is assigned to the automated selective connection of a plurality of storage containers to a plurality of molding machines (Cf. WO98/12140).

Currently commercially available plants in fact have a certain number of molding machines, each of which is provided with a hopper for loading the plastic granules into the molding units.

Depending on the type of product to be manufactured, it must be possible to load the hopper of each machine by taking the plastic material from a corresponding storage container.

The storage containers can be conveniently grouped according to the type of plastic material that they contain in granular form and according to the shape and/or size of the granules.

The connection for feeding the machines is currently provided by using appropriate flexible ducts, each of which is coupled to one of the containers at one end and is coupled to the loading hopper of a molding machine at the other end.

Loading into the hopper takes place by suction, by actually aspirating the plastic granules by using a vacuum pump.

When the reserve available in the container is used up, or if it is necessary to change production or type of plastics to be used, manual intervention of an operator is required to connect to the hopper a duct which leads out of a new container.

The fact is particularly noteworthy that an adequate seal must be ensured at each intervention of the operator in order to allow to draw the plastic granules by suction.

It is particularly evident that in current plants, all of which have a plurality of machines and must have the highest possible production level, such operations are extremely costly in terms of time, consequently slowing the production process and increasing overall costs.

In recent times, drum-type manifolds have been introduced which can be connected to a plurality of ducts leading out of the plastic containers and arranged all around so as to form a radial configuration.

The main drawback observed is due to the fact that the time required for the manifold to complete the connection changes according to the position of the duct from which the granules are to be taken and reaches the maximum value which corresponds to the path that must be covered in order to engage the last duct, which can be reached after a full turn through 360 sexagesimal degrees.

It is noted that in doing so the ducts are subjected to continuous scraping which causes considerable wear and consequent frequent breakage thereof.

The aim of the present invention is to provide a distribution manifold which can provide faster connections, thus solving the drawbacks noted above of conventional plants.

Within the scope of this aim, an important object of the present invention is to provide a distribution manifold which can fully automate the selective connection between a plurality of storage containers and a plurality of molding machines without thereby compromising in any way the production process by slowing it down.

Another important object to be achieved by providing the distribution manifold according to the invention is to work faster and with greater reliability in terms of tightness, so as to increase the production capacity of plastics molding plants.

Another important object of the present invention is to provide a distribution manifold which does not cause, due to the connections between the ducts for conveying the plastic granules, any wear which might lead to breakage or damage over time.

Another important object of the present invention is to provide a distribution manifold which can ensure modularity, i.e., having a structure which can be easily adapted to a variable number of ducts to be connected.

Another object of the present invention is also to provide a distribution manifold which can connect to each one of the ducts leading out of the storage containers or molding machines so that each time it takes considerably less time than the manifolds currently in use.

This aim, these objects and others which will become apparent hereinafter are achieved by a distribution manifold, particularly for the automated selective connection of a plurality of storage containers to a plurality of molding machines, characterized in that it comprises a central connector which is interposed between a first section for drawing plastic material from said containers and a second section for conveying the material toward said machines, at which it has, respectively, an inlet and an outlet, each one of said first and second sections comprising a respective first and second series of couplings, each of which can be connected to the end of a duct and can be moved by an actuation means, said actuation means selectively actuating each one of the couplings of said and second series, along planes which are radial with respect to the corresponding opening of said central connector, from a retracted inactive position to an active position in which the coupling is inserted in the corresponding inlet/outlet of said central connector.

Further characteristics and advantages of the present invention will become apparent from the following detailed description of a preferred embodiment thereof, illustrated only by way of non-limitative example in the accompanying drawings, wherein:
Figure 1 is a schematic view of a plastics processing plant which has a plurality of storage containers connected, by interposing a distribution manifold according to the invention, to a plurality of molding machines;

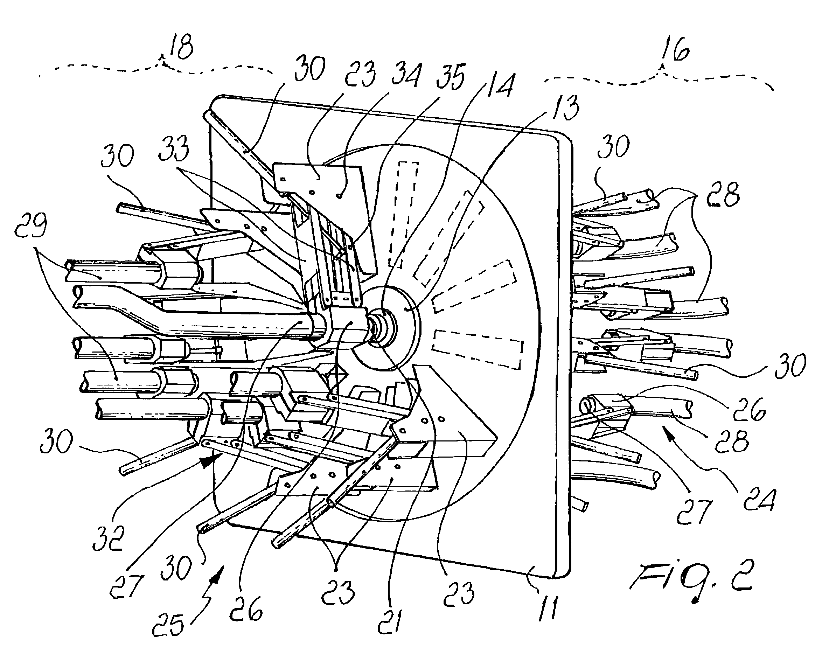

Figure 2 is a perspective view of a distribution manifold according to the present invention in the active configuration;

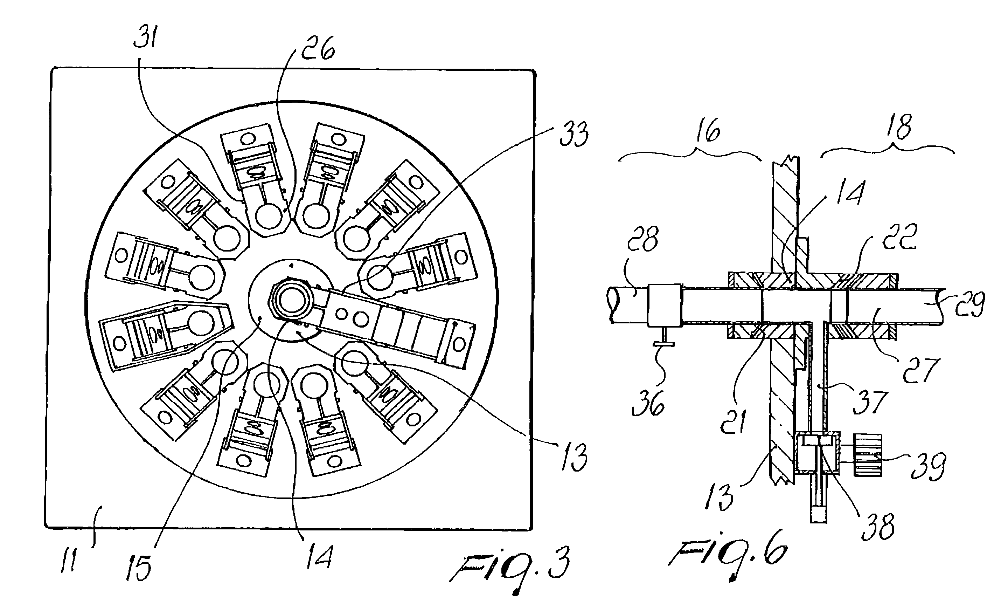

Figure 3 is a side view of the manifold of Figure 2;
Figure 4 is a sectional view, taken along a transverse plane, of the manifold of Figure 2;

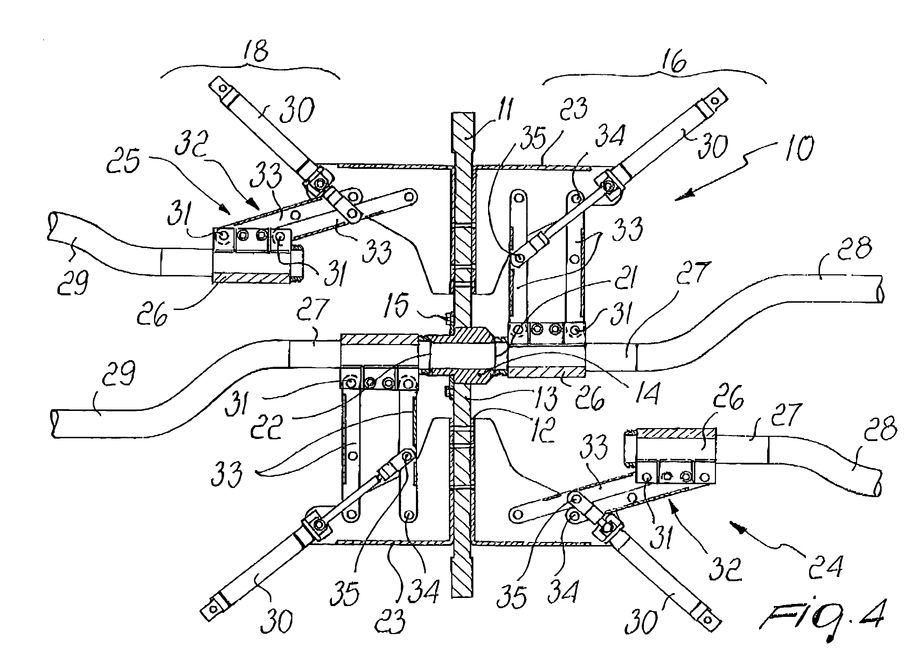

Figure 5 is a perspective view of a detail of the distribution manifold of Figure 2;
Figure 6 is a sectional view, taken along a longitudinal plane, of a detail of the distribution manifold of Figure 2.

With reference to the above figures, a distribution manifold according to the present invention is generally designated by the reference numeral 10 and comprises a supporting frame 11 which is constituted, in this case, by a flat body with a quadrangular contour which is arranged vertically and is conveniently provided with a footing, not shown in the figures for the sake of simplicity, for resting on the ground.

In the central region, the frame 11 has a gap 12 which in this case is circular and in which an annular support 13 is fitted, acting as a support for a central connector 14 which has a tubular structure.

The connector is in fact fixed to the support 13 by interposing a flange with bolts 15.

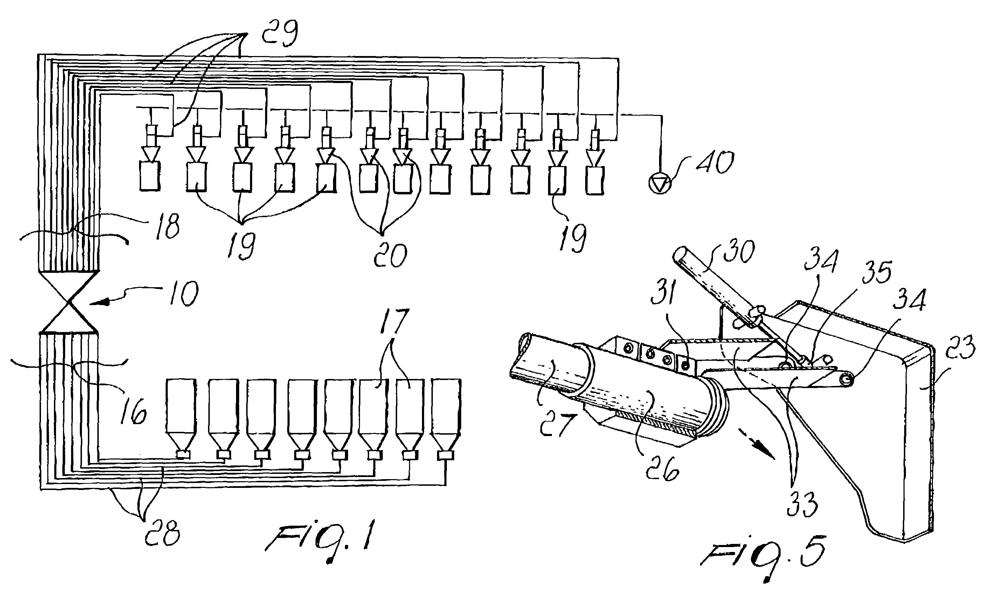

The frame 11 forms and ideally divides a first section, generally designated by the reference numeral 16, which corresponds to the region for drawing the plastic material from the storage containers 17, from a second section 18, which is directed toward the molding machines 19, shown schematically in Figure 1.

The same figure shows, for each one of said molding machines 19, a box-shaped collector 20a which lies above a hopper 20b which conveys the plastic granules to the loading area.

The central connector 14 has an inlet 21 on the side that leads into the first section 16 for drawing the plastic materials and an outlet 22 on the side leading to the second section 18; the outlet 22 is coaxial to the inlet 21.

Supporting brackets 23 are fixed onto the frame 11 at each one of the first and second sections 16 and 18 and are arranged all around the gap 12, so as to form a circular configuration with which a first series of couplings 24 and a second series of couplings 25 are operatively and respectively associated.

A coupling 26 is associated with each one of the brackets 23 by means of a linkage system described hereinafter and is coupled to the end 27 of a first or second flexible duct, designated by the reference numerals 28 and 29 respectively.

In this case, each one of the first ducts 28 runs from one of the plastics storage containers 17 to the first section 16, while each one of the second ends 29 protrudes from the second section 18 until it enters the hopper 20 for loading one of the molding machines 19.

The first and second series of couplings 24 and 25 are provided with respective actuation means, which in this case are constituted by pistons 30, each of which is fixed to one of the brackets 23.

Each coupling 26 is in fact coupled to an end 27 and is hinged, by means of first bolts 31, to the end of an articulated quadrilateral 32 which is formed, in this case, by two parallel linkages 33.

The linkages are in fact both hinged, at a first end, to the coupling 26 by means of the first bolts 31 and, at the opposite end, to a corresponding one of said supporting brackets 23 by means of second bolts 34.

For each bracket 23, it is noted that the end 35 of the stem of the piston 30 is conveniently hinged to one of the linkages 33 of the corresponding articulated quadrilateral 32.

It is also important to note that both the inlet 21 and the outlet 22 of the central connector 14 are provided with an annular sealing gasket, preferably made of rubber, in order to improve the coupling to the respective ends 27 of a first duct 28 and of a second duct 29.

Moreover, with particular reference to Figure 6, it is noted that in this embodiment each one of the first ducts 28 for drawing plastic granules from the storage containers 17 is provided with a closure valve, schematically designated by the reference numeral 36.

At the same time, in order to allow to clean the ducts 28 and 29, said central connector 14 is connected, by means of a branch-off duct 37, to a valve 38 and to a filter 39.

Conveniently, the distribution manifold 10 is provided with a controller, not shown in the above-cited figures for the sake of simplicity, which checks the amount of plastic material present in the collector 20a of each molding machine 19 and stores any request to load granules, when required, according to the type of plastic material to be used and to the production capacity of said machine 19.

The manifold 10 therefore actuates the pistons 30, in compliance with the priorities detected by the controller, so as to connect the container 17 related to the required plastic material, by means of the insertion of the ends 27 of a first duct 28 and of a second duct 29 in the central connector 14, to the machine 19 requiring it.

The manifold 10 obviously performs in an orderly succession, following the priorities set by the controller, the connections required for the continuous operation of the entire plant.

The controller is preferably constituted by a microprocessor.

It should be noted that the couplings of the ends 27 in the inlet 21 and in the outlet 22 must be hermetic, since it is to resort to a single vacuum pump, designated by the reference numeral 40 in Figure 1, which is conveniently connected to each one of the collectors 20a located above the hoppers 20b, in which it produces a negative pressure sufficient to ensure suction of the granules, which are accordingly drawn, through the connected ducts 28 and 29, from the container 17 until the hopper 20b is completely filled.

At the end of the step for aspirating the plastic granules, the closure valve 36 of the first duct 28 is closed and the cleaning valve 38 is opened so that the air aspirated by means of the filter 39 carries the granules remaining in the central connector 14 and in the second duct 29 and accordingly completes the cleaning process.

With this technical refinement, therefore, after completing the loading of one machine 19 with a first type of plastic granules there is no risk of mixing the granules of a second type of material meant for another machine 19 during the subsequent step for loading it.

In practice it has been observed that the present invention has achieved the intended aim and all the objects.

In particular, a distribution manifold has been provided which not only can provide faster connections for feeding molding machines but also and more importantly, according to the type of machine and to the type of plastic material required by said machine, allows to fully automate operation without compromising the production process with speed reductions or malfunctions.

Another considerable advantage achieved with the manifold according to the invention is due to the fact that it is now possible to work faster and more reliably as regards seal tightness, so as to increase the production capacity of plastics molding plants.

The manifold can in fact connect any one of the first ducts to any one of the second ducts, always taking in any case the same time to complete the coupling regardless of the position of each one of said ducts.

Each one of the articulated quadrilaterals 32, by cooperating with the respective piston 30, can in fact move along an arc the end 27 with which it is associated, so that it is not affected by any sliding which might cause wear and therefore breakage or damage.

Another considerable advantage is linked to the fact that the described manifold is modular, i.e., it can adapt to a variable number of ducts and for complex plants having a particularly large number of containers and/or molding machines (for example for processing many different kinds of plastic material) it is sufficient to cascade-connect a plurality of manifolds in order to provide all possible connections.

In addition to all of the above, it is certainly worth noting that the described distribution manifold reduces the number of valves assigned to cleaning the ducts and is capable of connecting to each one of the ducts leading out of the storage containers or leading to the molding machines, taking the same time in each case, said time being considerably shorter than in the manifolds currently in use.

The present invention is susceptible of numerous modifications and variations, all of which are within the scope of the same inventive concept.

All the details may also be replaced with other technically equivalent elements.

The materials employed, so long as they are compatible with the contingent use, as well as the dimensions, may be any according to requirements.

The disclosures in Italian Patent Application. No. PD98A000248 (IT 1998 PD00248) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A distribution manifold, particularly for the automated selective connection of a plurality of storage containers to a plurality of molding machines, **characterized in that** it comprises a central connector which is interposed between a first section for drawing plastic material from said containers and a second section for conveying the material toward said machines, at which it has, respectively, an inlet and an outlet, each one of said first and second sections comprising a respective first and second series of couplings, each of which can be connected to the end of a duct and can be moved by an actuation means, said actuation means selectively actuating each one of the couplings of said first and second series, along planes which are radial with respect to the corresponding opening of said central connector, from a retracted inactive position to an active position in which the coupling is inserted in the corresponding inlet/outlet of said central connector.

2. The manifold according to claim 1, **characterized in that** it comprises a frame provided with a gap crossed by said tubular central connector, said frame forming said first section for drawing plastic material at one end and said second section for conveying said plastic material at the other end.

3. The manifold according to claim 2, **characterized in that** it comprises supporting brackets which are fixed to the frame at each one of said first and second sections and are arranged all around the central connector so as to form a circular configuration, a coupling with the respective actuation means being operatively associated with each one of said brackets.

4. The manifold according to claim 1, **characterized in that** said actuation means are pistons.

5. The manifold according to claim 4, **characterized in that** each piston is fixed to one of said brackets and actuates one of said couplings by means of a linkage, said coupling being in turn coupled to the end of a duct.

6. The manifold according to claim 5, **characterized in that** said linkage is constituted by an articulated quadrilateral which is formed by two parallel linkages which are hinged to the coupling at a first end and to the supporting bracket at the opposite end, the end of the stem of said piston being hinged to one of said linkages.

7. The manifold according to claim 1, **characterized in that** both said inlet and said outlet of the central connector have an annular sealing gasket.

8. The manifold according to claim 1, **characterized in that** said inlet and outlet of the central connector are coaxial.

9. The manifold according to claim 1, **characterized in that** said central connector is connected, by means of a branch-off duct, to a valve and to a filter for cleaning the ducts.

10. The manifold according to claim 1, **characterized in that** it comprises a controller which stores an ordered sequence of requests to load the molding machines and provides the required enable signals to the actuation means in order to provide the connections between said ducts according to priority criteria.

11. The manifold according to claim 2, **characterized in that** an: annular support is fitted in said gap, said central connector being fixed to said support by interposing a flange with bolts.

## Patentansprüche

1. Verteilerleitungssystem, insbesondere für die automatisierte, selektive Verbindung einer Mehrzahl von Vorratsbehältern mit einer Mehrzahl von Gießmaschinen, **dadurch gekennzeichnet, daß** es einen zentralen Verbinder umfaßt, welcher zwischen einem ersten, für ein Abziehen von Kunststoffmaterial aus den genannten Containern bestimmten Bereich und einem zweiten, zum Fördern des Materials zu den genannten Maschinen bestimmten Bereich angeordnet ist, an dem es jeweils einen Einlaß und einen Auslaß hat, wobei jeder der genannten ersten und zweiten Bereiche jeweils eine erste bzw. zweite Reihe von Kupplungen hat, deren jede mit dem Ende einer Leitung verbindbar und durch Betätigungsmittel bewegbar ist, wobei die genannten BeLätigungsmittel selektiv jede der Kupplungen der ersten und zweiten Reihe betätigen, entlang von Ebenen, welche gegenüber der korrespondierenden Öffnung des zentralen Ver-binders radial verlaufen, und zwar von einer zurückgezogenen, inaktiven Stellung in eine aktive Stellung, in der das Kupplungsstück in den korrespondierenden Einlaß/Auslaß des zentralen Verbinders eingesetzt wird.

2. Leitungssystem nach Anspruch 1, **dadurch gekennzeichnet, daß** es ein Gestell umfaßt, das mit einer Ausnehmung versehen ist, die von dem genannten röhrenförmigen zentralen Verbinder durchsetzt wird, wobei das Gestell an einem Ende den genannten ersten Bereich zum Abziehen von Kunststoffmaterial bildet und am anderen Ende den genannten zweiten Bereich zum Fördern des genannten Kunststoffmaterials.

3. Leitungssystem nach Anspruch 2, **dadurch gekennzeichnet, daß** es Halter umfaßt, welche in jedem der genannten ersten und zweiten Bereiche an dem Rahmen befestigt und sämtlich so um den zentralen Verbinder herum angeordnet sind, daß sie eine kreisförmige Konfiguration bilden, wobei eine Kupplung mit den entsprechenden Betätigungsmitteln betätigbar mit jedem der genannten Halter verbunden ist.

4. Leitungssystem nach Anspruch 1, **dadurch gekennzeichnet, daß** die Betätigungsmittel Kolben sind.

5. Leitungssystem nach Anspruch 4, **dadurch gekennzeichnet, daß** jeder Kolben an einem der genannten Halter befestigt ist und eine der genannten Kupplungen durch ein Hebelgestänge betätigt, wobei die genannte Kupplung wiederum mit dem Ende einer Leitung gekoppelt ist.

6. Leitungssystem nach Anspruch 5, **dadurch gekennzeichnet, daß** das genannte Hebelgestänge durch ein Gelenkviereck gebildet wird, welches von zwei parallelen Hebelgestängen gebildet ist, welche an einem ersten Ende an der Kupplung angelenkt sind und am gegenüberliegenden Ende am Halter, wobei die Stange des genannten Kolbens an einem der genannten Hebelgestänge angelenkt ist.

7. Leitungssystem nach Anspruch 1, **dadurch gekennzeichnet, daß** sowohl die genannten Einlasse als auch die genannten Auslässe des zentralen Verbinders eine ringförmige Dichtung haben.

8. Leitungssystem nach Anspruch 1, **dadurch gekennzeichnet, daß** der genannte Einlaß und der genannte Auslaß des zentralen Verbinders koaxial sind.

9. Leitungssystem nach Anspruch 1, **dadurch gekennzeichnet, daß** der genannte zentrale Verbinder mittels einer Abzweigleitung mit einem Ventil und einem Filter zum Reinigen der Leitungen verbunden ist.

10. Leitungssystem nach Anspruch 1, **dadurch gekennzeichnet, daß** es eine Steuerung aufweist, welche eine geordnete Folge von Befehlen zum Beschicken der Gießmaschinen speichert und die erforderlichen Auslösesignale für die Betätigungsmittel erzeugt, um die Verbindung zwischen den genannten Leitungen gemäß den Prioritätskriterien zu schaffen.

11. Leitungssystem nach Anspruch 2, **dadurch gekennzeichnet, daß** ein ringförmiger Träger in die genannte Ausnehmung eingepaßt ist, wobei der genannte zentrale Verbinder an dem genannten Träger durch Einfügen eines Flansches mit Schrauben befestigt ist.

## Revendications

1. Collecteur de distribution, destiné en particulier au raccordement sélectif automatisé d'une pluralité de réservoirs de stockage à une pluralité de machines à mouler, **caractérisé en ce qu'**il comprend un organe de raccordement central qui est interposé entre une première section pour aspirer une matière plastique en provenance desdits réservoirs et une deuxième section destinée à transporter la matière plastique vers lesdites machines, au niveau desquelles il a respectivement une entrée et une sortie, chacune desdites première et deuxième sections comprenant respectivement une première ou une deuxième série de raccords dont chacun peut être relié à l'extrémité d'un conduit et peut être déplacé par un moyen d'actionnement, ledit moyen d'actionnement actionnant sélectivement chacun des raccords desdites première et deuxième séries, le long de plans qui sont radiaux par rapport à l'ouverture correspondante dudit organe de raccordement central, pour les faire passer d'une position inactive rétractée à une position active dans laquelle le raccord est inséré dans l'entrée/sortie correspondante dudit organe de raccordement central.

2. Collecteur selon la revendication 1, **caractérisé en ce qu'**il comprend un châssis muni d'un évidement traversé par ledit organe de raccordement central tubulaire, ledit châssis formant ladite première section pour aspirer de la matière plastique à une extrémité et ladite deuxième section destinée à transporter ladite matière plastique à l'autre extrémité.

3. Collecteur selon la revendication 2, **caractérisé en ce qu'**il comprend des ferrures de support qui sont fixées au châssis au niveau de chacune desdites première et deuxième sections et qui sont arrangées tout autour de l'organe de raccordement central de manière à former une configuration circulaire, un raccord avec le moyen d'actionnement correspondant étant associé fonctionnellement à chacune desdites ferrures.

4. Collecteur selon la revendication 1, **caractérisé en ce que** lesdits moyens d'actionnement sont des pistons.

5. Collecteur selon la revendication 4, **caractérisé en ce que** chaque piston est fixé à l'une desdites ferrures et actionne l'un desdits raccords au moyen d'une tringlerie, ledit raccord étant à son tour accouplé à l'extrémité d'un conduit.

6. Collecteur selon la revendication 5, **caractérisé en ce que** ladite tringlerie est constituée par un quadrilatère articulé qui est formé de deux biellettes parallèles qui sont articulées au raccord à une première extrémité et à la ferrure porteuse à l'extrémité opposée, l'extrémité de la tige dudit piston étant articulée sur l'une desdites biellettes.

7. Collecteur selon la revendication 1, **caractérisé en ce que** ladite entrée et ladite sortie de l'organe de raccordement central possèdent chacune un joint d'étanchéité annulaire.

8. Collecteur selon la revendication 1, **caractérisé en ce que** ladite entrée et ladite sortie de l'organe de raccordement central sont coaxiales.

9. Collecteur selon la revendication 1, **caractérisé en ce que** ledit organe de raccordement central est relié, au moyen d'un conduit de dérivation, à une vanne et à un filtre pour le nettoyage des conduits.

10. Collecteur selon la revendication 1, **caractérisé en ce qu'** il comprend une unité de commande qui mémorise une séquence ordonnée de demandes pour charger les machines à mouler et qui envoie les signaux d'autorisation voulus aux moyens d'actionnement afin d'établir les liaisons entre lesdits conduits selon des critères de priorité.

11. Collecteur selon la revendication 2, **caractérisé en ce qu'**un support annulaire est monté dans ledit évidement, ledit organe de raccordement central étant fixé audit support par interposition d'une bride munie de boulons.
